# EUROPEAN PATENT APPLICATION

(11) **EP 3 758 290 A1**
(43) Date of publication of application: **30.12.2020**
(21) Application number: 20165518.0
(22) Date of filing: 25.03.2020
(51) Int. Cl.: H04L 9/32

(54) **PARALLEL PROCESSING TECHNIQUES FOR HASH-BASED SIGNATURE ALGORITHMS**

(30) Priority: 28.06.2019 US 201916456004
(71) Applicant: INTEL Corporation, Santa Clara, CA 95054 (US)
(72) Inventor: WHEELER, David, Chandler, AZ Arizona 85226 (US); SASTRY, Manoj, Portland, OR Oregon 97229 (US); GHOSH, Santosh, Hillsboro, OR Oregon 97124 (US); MISOCZKI, Rafael, Hillsboro, OR Oregon 97124 (US)
(74) Representative: Viering, Jentschura & Partner mbB Patent- und Rechtsanwälte

(57) **Abstract**

In one example an apparatus comprises a computer readable memory to store a public key associated with a signing device, communication logic to receive, from the signing device, a signature chunk which is a component of a signature generated by a hash-based signature algorithm, and at least a first intermediate node value associated with the signature chunk, verification logic to execute a first hash chain beginning with the signature chunk to produce at least a first computed intermediate node value, execute a second hash chain beginning with the at least one intermediate node value associated with the signature chunk to produce a first computed final node value, and use the first computed intermediate node value and the first computed final computed node value to validate the signature generated by the hash-based signature algorithm. Other examples may be described.

## Description

### BACKGROUND

Subject matter described herein relates generally to the field of computer security and more particularly to parallel processing techniques for hash-based signature algorithms.

Existing public-key digital signature algorithms such as Rivest-Shamir-Adleman (RSA) and Elliptic Curve Digital Signature Algorithm (ECDSA) are anticipated not to be secure against brute-force attacks based on algorithms such as Shor's algorithm using quantum computers. As a result, there are efforts underway in the cryptography research community and in various standards bodies to define new standards for algorithms that are secure against quantum computers.

Accordingly, techniques to accelerate post-quantum signature schemes such may find utility, e.g., in computer-based communication systems and methods.

### BRIEF DESCRIPTION OF THE DRAWINGS

The detailed description is described with reference to the accompanying figures.
Figs. 1A and 1B are schematic illustrations of a one-time hash-based signatures scheme and a multi-time hash-based signatures scheme, respectively.
Figs. 2A-2B are schematic illustrations of a one-time signature scheme and a multi-time signature scheme, respectively.
Fig. 3 is a schematic illustration of a signing device and a verifying device, in accordance with some examples.
Fig. 4A is a schematic illustration of a Merkle tree structure, in accordance with some examples.
Fig. 4B is a schematic illustration of a Merkle tree structure, in accordance with some examples.
Fig. 5 is a schematic illustration of a compute blocks in an architecture to implement a signature algorithm, in accordance with some examples.
Fig. 6A is a schematic illustration of a compute blocks in an architecture to implement signature generation in a signature algorithm, in accordance with some examples.
Fig. 6B is a schematic illustration of a compute blocks in an architecture to implement signature verification in a verification algorithm, in accordance with some examples.
Fig. 7 is a schematic illustration of a processing sequence to compute a hash-based signature.
Fig. 8 is a schematic illustration of a processing sequence to compute a hash-based signature, in accordance with some examples.
Fig. 9 is a flowchart illustrating operations in a method to implement parallel processing techniques for hash-based signature algorithms, in accordance with some examples.
Fig. 10 is a schematic illustration of a processing sequence through a Merkle tree.
Fig. 11 is a schematic illustration of a processing sequence through a Merkle tree.
Fig. 12 is a schematic illustration of a computing architecture which may be adapted to implement hardware acceleration in accordance with some examples.

### DETAILED DESCRIPTION

Described herein are exemplary systems and methods to implement accelerators for post-quantum cryptography secure hash-based signature algorithms. In the following description, numerous specific details are set forth to provide a thorough understanding of various examples. However, it will be understood by those skilled in the art that the various examples may be practiced without the specific details. In other instances, well-known methods, procedures, components, and circuits have not been illustrated or described in detail so as not to obscure the examples.

As described briefly above, existing public-key digital signature algorithms such as Rivest-Shamir-Adleman (RSA) and Elliptic Curve Digital Signature Algorithm (ECDSA) are anticipated not to be secure against brute-force attacks based on algorithms such as Shor's algorithm using quantum computers. The eXtended Merkle signature scheme (XMSS) and/or an eXtended Merkle many time signature scheme (XMSS-MT) are hash-based signature schemes that can protect against attacks by quantum computers. As used herein, the term XMSS shall refer to both the XMSS scheme and the XMSS-MT scheme.

An XMSS signature process implements a hash-based signature scheme using a one-time signature scheme such as a Winternitz one-time signature (WOTS) or a derivative there of (e.g., WOTS+) in combination with a secure hash algorithm (SHA) such as SHA2-256 as the primary underlying hash function. In some examples the XMSS signature/verification scheme may also use one or more of SHA2-512, SHA3-SHAKE-256 or SHA3-SHAKE-512 as secure hash functions. XMSS-specific hash functions include a Pseudo-Random Function (PRF), a chain hash (F), a tree hash (H) and message hash function (H_{msg}). As used herein, the term WOTS shall refer to the WOTS signature scheme and or a derivative scheme such as WOTS+.

The Leighton/Micali signature (LMS) scheme is another hash-based signature scheme that uses Leighton/Micali one-time signatures (LM-OTS) as the one-time signature building block. LMS signatures are based on a SHA2-256 hash function.

An XMSS signature process comprises three major operations. The first major operation receives an input message (M) and a private key (sk) and utilizes a one-time signature algorithm (e.g., WOTS+) to generate a message representative (M') that encodes a public key (pk). In a 128-bit post quantum security implementation the input message M is subjected to a hash function and then divided into 67 message components (n bytes each), each of which are subjected to a hash chain function to generate the a corresponding 67 components of the digital signature. Each chain function invokes a series of underlying secure hash algorithms (SHA).

The second major operation is an L-Tree computation, which combines WOTS+ (or WOTS) public key components (n-bytes each) and produces a single n-byte value. For example, in the 128-bit post-quantum security there are 67 public key components, each of which invokes an underlying secure hash algorithm (SHA) that is performed on an input block.

The third major operation is a tree-hash operation, which constructs a Merkle tree. In an XMSS verification, an authentication path that is provided as part of the signature and the output of L-tree operation is processed by a tree-hash operation to generate the root node of the Merkle tree, which should correspond to the XMSS public key. For XMSS verification with 128-bit post-quantum security, traversing the Merkle tree comprises executing secure hash operations. In an XMSS verification, the output of the Tree-hash operation is compared with the known public key. If they match then the signature is accepted. By contrast, if they do not match then the signature is rejected.

The XMSS signature process is computationally expensive. An XMSS signature process invokes hundreds, or even thousands, of cycles of hash computations. Subject matter described herein addresses these and other issues by providing systems and methods to implement accelerators for post-quantum cryptography secure XMSS and LMS hash-based signing and verification.

### Post-Quantum Cryptography Overview

Post-Quantum Cryptography (also referred to as "quantum-proof', "quantum-safe", "quantum-resistant", or simply "PQC") takes a futuristic and realistic approach to cryptography. It prepares those responsible for cryptography as well as end-users to know the cryptography is outdated; rather, it needs to evolve to be able to successfully address the evolving computing devices into quantum computing and post-quantum computing.

It is well-understood that cryptography allows for protection of data that is communicated online between individuals and entities and stored using various networks. This communication of data can range from sending and receiving of emails, purchasing of goods or services online, accessing banking or other personal information using websites, etc.

Conventional cryptography and its typical factoring and calculating of difficult mathematical scenarios may not matter when dealing with quantum computing. These mathematical problems, such as discrete logarithm, integer factorization, and elliptic-curve discrete logarithm, etc., are not capable of withstanding an attack from a powerful quantum computer. Although any post-quantum cryptography could be built on the current cryptography, the novel approach would need to be intelligent, fast, and precise enough to resist and defeat any attacks by quantum computers
Today's PQC is mostly focused on the following approaches: 1) hash-based cryptography based on Merkle's hash tree public-key signature system of 1979, which is built upon a one-message-signature idea of Lamport and Diffie; 2) code-based cryptography, such as McEliece's hidden-Goppa-code public-key encryption system; 3) lattice-based cryptography based on Hoffstein-Pipher-Silverman public-key-encryption system of 1998; 4) multivariate-quadratic equations cryptography based on Patarin's HFE public-key-signature system of 1996 that is further based on the Matumoto-Imai proposal; 5) supersingular elliptical curve isogeny cryptography that relies on supersingular elliptic curves and supersingular isogeny graphs; and 6) symmetric key quantum resistance.

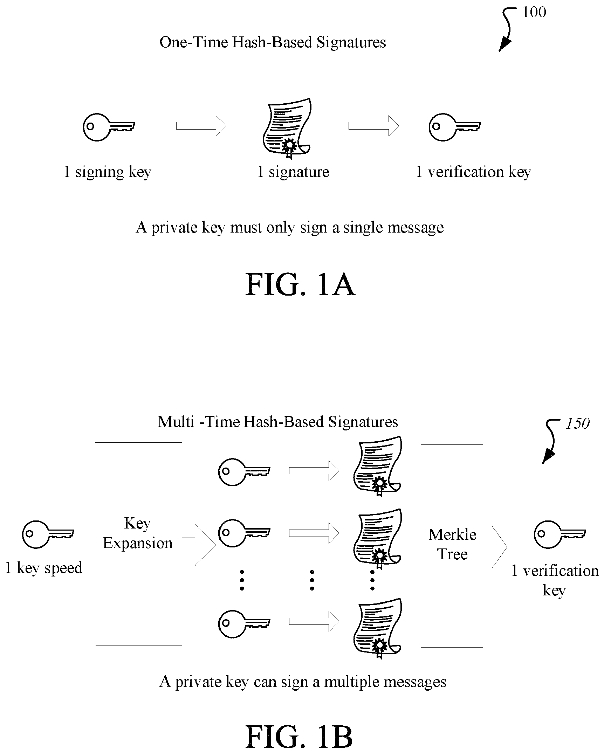

Figures 1A and 1B illustrate a one-time hash-based signatures scheme and a multi-time hash-based signatures scheme, respectively. As aforesaid, hash-based cryptography is based on cryptographic systems like Lamport signatures, Merkle Signatures, extended Merkle signature scheme (XMSS), and SPHINCs scheme, etc. With the advent of quantum computing and in anticipation of its growth, there have been concerns about various challenges that quantum computing could pose and what could be done to counter such challenges using the area of cryptography.

One area that is being explored to counter quantum computing challenges is hash-based signatures (HBS) since these schemes have been around for a long while and possess the necessarily basic ingredients to counter the quantum counting and post-quantum computing challenges. HBS schemes are regarded as fast signature algorithms working with fast platform secured-boot, which is regarded as the most resistant to quantum and post-quantum computing attacks.

For example, as illustrated with respect to Figure 1A, a scheme of HBS is shown that uses Merkle trees along with a one-time signature (OTS) scheme 100, such as using a private key to sign a message and a corresponding public key to verify the OTS message, where a private key only signs a single message.

Similarly, as illustrated with respect to Figure 1B, another HBS scheme is shown, where this one relates to multi-time signatures (MTS) scheme 150, where a private key can sign multiple messages.

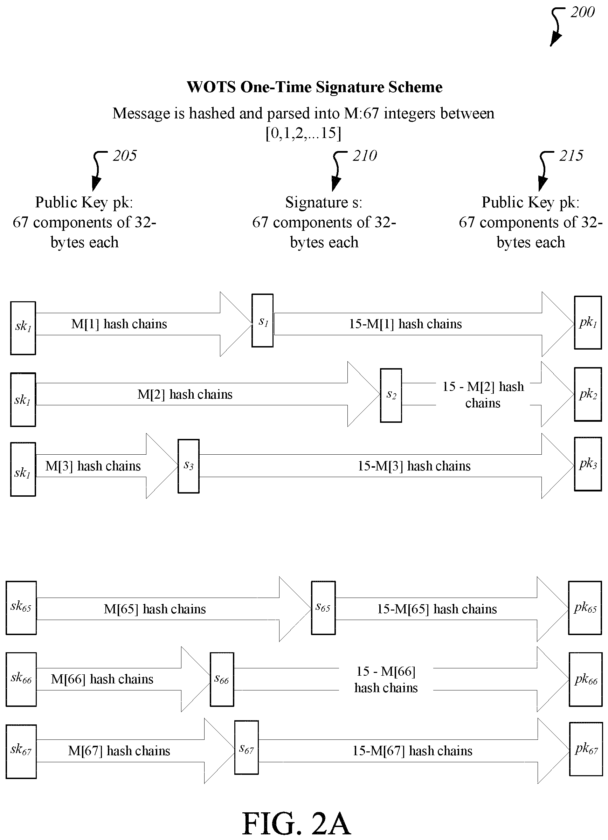

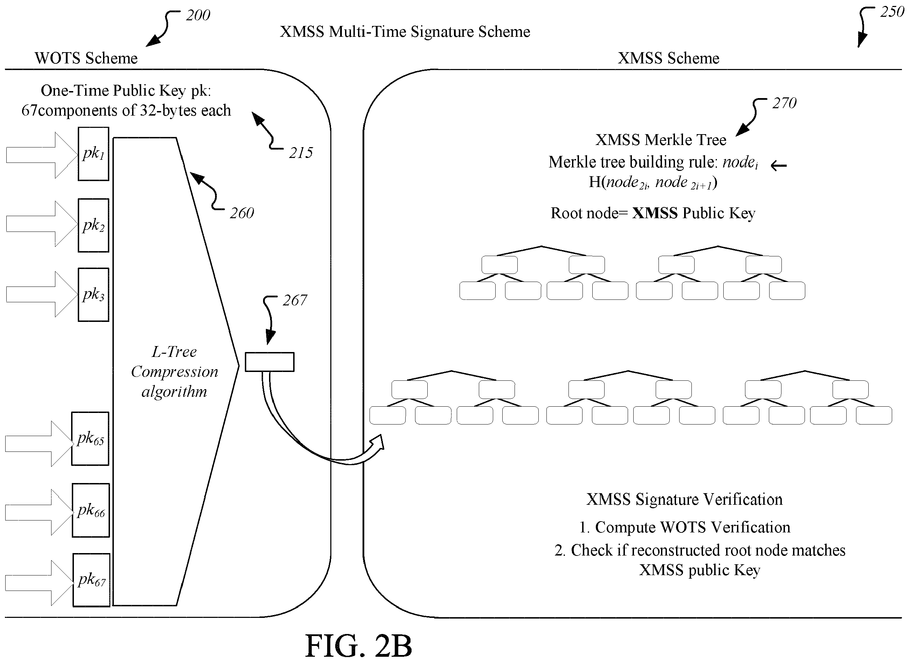

Figures 2A and 2B illustrate a one-time signature scheme and a multi-time signature scheme, respectively. Continuing with HBS-based OTS scheme 100 of Figure 1A and MTS scheme 150 of Figure 1B, Figure 2A illustrates Winternitz OTS scheme 200, which was offered by Robert Winternitz of Stanford Mathematics Department publishing as hw(x) as opposed to h(x)|h(y), while Figure 2B illustrates XMSS MTS scheme 250, respectively.

For example, WOTS scheme 200 of Fig. 2A provides for hashing and parsing of messages into M, with 67 integers between [0, 1,2, ..., 15], such as private key, sk, 205, signature, s, 210, and public key, pk, 215, with each having 67 components of 32 bytes each.

Fig. 2B illustrates XMSS MTS scheme 250 that allows for a combination of WOTS scheme 200 of Figure 2A and XMSS scheme 255 having XMSS Merkle tree. As discussed previously with respect to Figure 2A, WOTs scheme 200 is based on a one-time public key, pk, 215, having 67 components of 32 bytes each, that is then put through L-Tree compression algorithm 260 to offer WOTS compressed pk 265 to take a place in the XMSS Merkle tree of XMSS scheme 255. It is contemplated that XMSS signature verification may include computing WOTS verification and checking to determine whether a reconstructed root node matches the XMSS public key, such as root node = XMSS public key.

### Post-Quantum Cryptography Algorithms

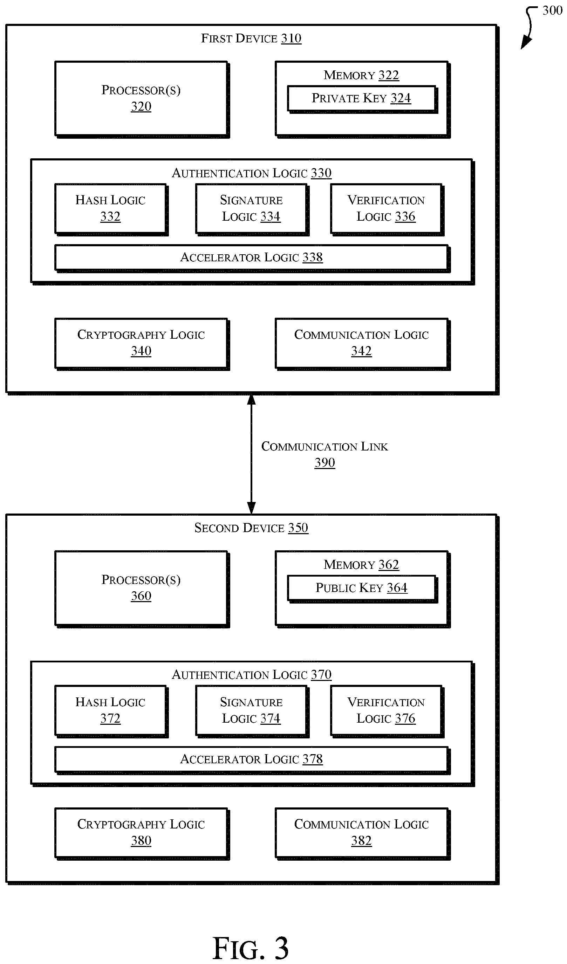

Fig. 3 is a schematic illustration of a high-level architecture of a secure environment 300 that includes a first device 310 and a second device 350, in accordance with some examples. Referring to Fig. 3, each of the first device 310 and the second device 350 may be embodied as any type of computing device capable of performing the functions described herein. For example, in some embodiments, each of the first device 310 and the second device 350 may be embodied as a laptop computer, tablet computer, notebook, netbook, Ultrabook™, a smartphone, cellular phone, wearable computing device, personal digital assistant, mobile Internet device, desktop computer, router, server, workstation, and/or any other computing/communication device.

First device 310 includes one or more processor(s) 320 and a memory 322 to store a private key 324. The processor(s) 320 may be embodied as any type of processor capable of performing the functions described herein. For example, the processor(s) 320 may be embodied as a single or multi-core processor(s), digital signal processor, microcontroller, or other processor or processing/controlling circuit. Similarly, the memory 322 may be embodied as any type of volatile or non-volatile memory or data storage capable of performing the functions described herein. In operation, the memory 322 may store various data and software used during operation of the first device 310 such as operating systems, applications, programs, libraries, and drivers. The memory 322 is communicatively coupled to the processor(s) 320. In some examples the private key 324 may reside in a secure memory that may be part memory 322 or may be separate from memory 322.

First device 310 further comprises authentication logic 330 which includes memory 332, signature logic, and verification logic 336. Hash logic 332 is configured to hash (i.e., to apply a hash function to) a message (M) to generate a hash value (m') of the message M. Hash functions may include, but are not limited to, a secure hash function, e.g., secure hash algorithms SHA2-256 and/or SHA3-256, etc. SHA2-256 may comply and/or be compatible with Federal Information Processing Standards (FIPS) Publication 180-4, titled: "Secure Hash Standard (SHS)", published by National Institute of Standards and Technology (NIST) in March 2012, and/or later and/or related versions of this standard. SHA3-256 may comply and/or be compatible with FIPS Publication 202, titled: "SHA-3 Standard: Permutation-Based Hash and Extendable-Output Functions", published by NIST in August 2015, and/or later and/or related versions of this standard.

Signature logic 332 may be configured to generate a signature to be transmitted, i.e., a transmitted signature. In instances in which the first device 310 is the signing device, the transmitted signature may include a number, L, of transmitted signature elements with each transmitted signature element corresponding to a respective message element. For example, for each message element, mᵢ, signature logic 332 may be configured to perform a selected signature operation on each private key element, ski of the private key, sk, a respective number of times related to a value of each message element, mi included in the message representative m'. For example, signature logic 332 may be configured to apply a selected hash function to a corresponding private key element, skᵢ, mᵢ times. In another example, signature logic 332 may be configured to apply a selected chain function (that contains a hash function) to a corresponding private key element, skᵢ, mᵢ times. The selected signature operations may, thus, correspond to a selected hash-based signature scheme.

As described above, hash-based signature schemes may include, but are not limited to, a Winternitz (W) one time signature (OTS) scheme, an enhanced Winternitz OTS scheme (e.g., WOTS+), a Merkle many time signature scheme, an extended Merkle signature scheme (XMSS) and/or an extended Merkle multiple tree signature scheme (XMSS-MT), etc. Hash functions may include, but are not limited to SHA2-256 and/or SHA3-256, etc. For example, XMSS and/or XMSS-MT may comply or be compatible with one or more Internet Engineering Task Force (IETF.RTM.) informational draft Internet notes, e.g., "XMSS: Extended Hash-Based Signatures, released May, 2018, by the Internet Research Task Force (IRTF), Crypto Forum Research Group which may be found at https://tools.ietf.org/html/rfc8391.

A WOTS signature algorithm may be used to generate a signature and to verify a received signature utilizing a hash function. WOTS is further configured to use the private key and, thus, each private key element, skᵢ, one time. For example, WOTS may be configured to apply a hash function to each private key element, mi or N-mᵢ times to generate a signature and to apply the hash function to each received message element N-m_{i'} or m_{i'} times to generate a corresponding verification signature element. The Merkle many time signature scheme is a hash-based signature scheme that utilizes an OTS and may use a public key more than one time. For example, the Merkle signature scheme may utilize Winternitz OTS as the one-time signature scheme. WOTS+ is configured to utilize a family of hash functions and a chain function.

XMSS, WOTS+ and XMSS-MT are examples of hash-based signature schemes that utilize chain functions. Each chain function is configured to encapsulate a number of calls to a hash function and may further perform additional operations. In some examples, the number of calls to the hash function included in the chain function may be fixed. Chain functions may improve security of an associated hash-based signature scheme.

Cryptography logic 340 is configured to perform various cryptographic and/or security functions on behalf of the signing device 310. In some embodiments, the cryptography logic 340 may be embodied as a cryptographic engine, an independent security co-processor of the signing device 310, a cryptographic accelerator incorporated into the processor(s) 320, or a standalone software/firmware. In some embodiments, the cryptography logic 340 may generate and/or utilize various cryptographic keys (e.g., symmetric/asymmetric cryptographic keys) to facilitate encryption, decryption, signing, and/or signature verification. Additionally, in some embodiments, the cryptography logic 340 may facilitate to establish a secure connection with remote devices over communication link. It should further be appreciated that, in some embodiments, the cryptography module 340 and/or another module of the first device 310 may establish a trusted execution environment or secure enclave within which a portion of the data described herein may be stored and/or a number of the functions described herein may be performed.

After the signature is generated as described above, the message, M, and signature may then be sent by first device 310, e.g., via communication logic 342, to second device 350 via network communication link 390. In an embodiment, the message, M, may not be encrypted prior to transmission. In another embodiment, the message, M, may be encrypted prior to transmission. For example, the message, M, may be encrypted by cryptography logic 340 to produce an encrypted message.

Second device 350 may also include one or more processors 360 and a memory 362 to store a public key 364. As described above, the processor(s) 360 may be embodied as any type of processor capable of performing the functions described herein. For example, the processor(s) 360 may be embodied as a single or multi-core processor(s), digital signal processor, microcontroller, or other processor or processing/controlling circuit. Similarly, the memory 362 may be embodied as any type of volatile or non-volatile memory or data storage capable of performing the functions described herein. In operation, the memory 362 may store various data and software used during operation of the second device 350 such as operating systems, applications, programs, libraries, and drivers. The memory 362 is communicatively coupled to the processor(s) 360.

In some examples the public key 364 may be provided to second device 350 in a previous exchange. The public key, pₖ, is configured to contain a number L of public key elements, i.e., pₖ=[pₖ₁, ... , p_{kL}]. The public key 364 may be stored, for example, to memory 362.

Second device 350 further comprises authentication logic 370 which includes hash logic 372, signature logic, and verification logic 376. As described above, hash logic 372 is configured to hash (i.e., to apply a hash function to) a message (M) to generate a hash message (m'). Hash functions may include, but are not limited to, a secure hash function, e.g., secure hash algorithms SHA2-256 and/or SHA3-256, etc. SHA2-256 may comply and/or be compatible with Federal Information Processing Standards (FIPS) Publication 180-4, titled: "Secure Hash Standard (SHS)", published by National Institute of Standards and Technology (NIST) in March 2012, and/or later and/or related versions of this standard. SHA3-256 may comply and/or be compatible with FIPS Publication 202, titled: "SHA-3 Standard: Permutation-Based Hash and Extendable-Output Functions", published by NIST in August 2015, and/or later and/or related versions of this standard.

In instances in which the second device is the verifying device, authentication logic 370 is configured to generate a verification signature based, at least in part, on the signature received from the first device and based, at least in part, on the received message representative (m'). For example, authentication logic 370 may configured to perform the same signature operations, i.e., apply the same hash function or chain function as applied by hash logic 332 of authentication logic 330, to each received message element a number, N-m_{i'} (or m_{i'}), times to yield a verification message element. Whether a verification signature, i.e., each of the L verification message elements, corresponds to a corresponding public key element, pki, may then be determined. For example, verification logic 370 may be configured to compare each verification message element to the corresponding public key element, pₖᵢ. If each of the verification message element matches the corresponding public key element, pₖᵢ, then the verification corresponds to success. In other words, if all of the verification message elements match the public key elements, pₖ₁, ... , pk_{L}, then the verification corresponds to success. If any verification message element does not match the corresponding public key element, pki, then the verification corresponds to failure.

As described in greater detail below, in some examples the authentication logic 330 of the first device 310 includes one or more accelerators 338 that cooperate with the hash logic 332, signature logic 334 and/or verification logic 336 to accelerate authentication operations. Similarly, in some examples the authentication logic 370 of the second device 310 includes one or more accelerators 378 that cooperate with the hash logic 372, signature logic 374 and/or verification logic 376 to accelerate authentication operations. Examples of accelerators are described in the following paragraphs and with reference to the accompanying drawings.

The various modules of the environment 300 may be embodied as hardware, software, firmware, or a combination thereof. For example, the various modules, logic, and other components of the environment 300 may form a portion of, or otherwise be established by, the processor(s) 320 of first device 310 or processor(s) 360 of second device 350, or other hardware components of the devices As such, in some embodiments, one or more of the modules of the environment 300 may be embodied as circuitry or collection of electrical devices (e.g., an authentication circuitry, a cryptography circuitry, a communication circuitry, a signature circuitry, and/or a verification circuitry). Additionally, in some embodiments, one or more of the illustrative modules may form a portion of another module and/or one or more of the illustrative modules may be independent of one another.

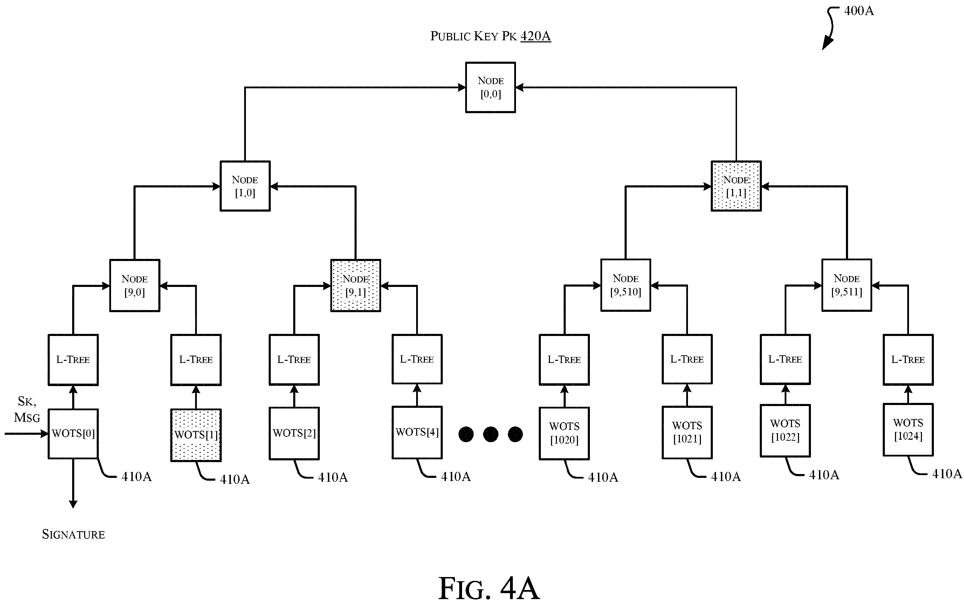

Fig. 4A is a schematic illustration of a Merkle tree structure illustrating signing operations, in accordance with some examples. Referring to Fig. 4A, an XMSS signing operation requires the construction of a Merkle tree 400A using the local public key from each leaf WOTS node 410 to generate a global public key (PK) 420. In some examples the authentication path and the root node value can be computed off-line such that these operations do not limit performance. Each WOTS node 410 has a unique secret key, "sk" which is used to sign a message only once. The XMSS signature consists of a signature generated for the input message and an authentication path of intermediate tree nodes to construct the root of the Merkle tree.

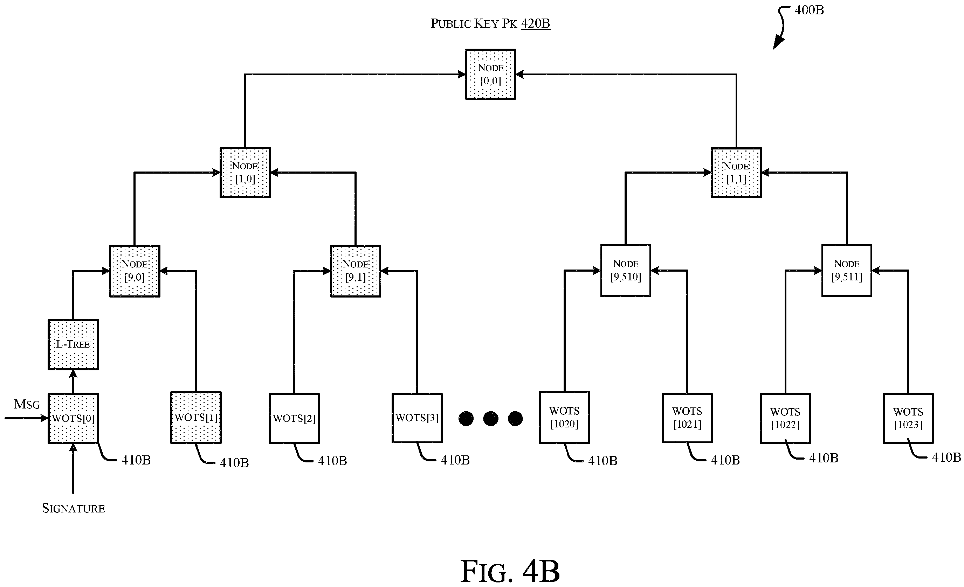

Fig. 4B is a schematic illustration of a Merkle tree structure 400B during verification, in accordance with some examples. In some examples, all WOTS public keys pass through the L-Tree process, which generates the corresponding leaf nodes of the Merkle tree. During verification, the input messages and signatures are used to compute the local public key 420B of the WOTS node, which is further used to compute the tree root value using the authentication path. A successful verification will match the computed tree root value to the public key PK shared by the signing entity. The WOTS and L-Tree operations constitute a significant portion of XMSS sign/verify latency respectively, thus defining the overall performance of the authentication system. Described herein are various pre-computation techniques which may be implemented to speed-up WOTS and L-Tree operations, thereby improving XMSS performance. The techniques are applicable to the other hash options and scale well for both software and hardware implementations.

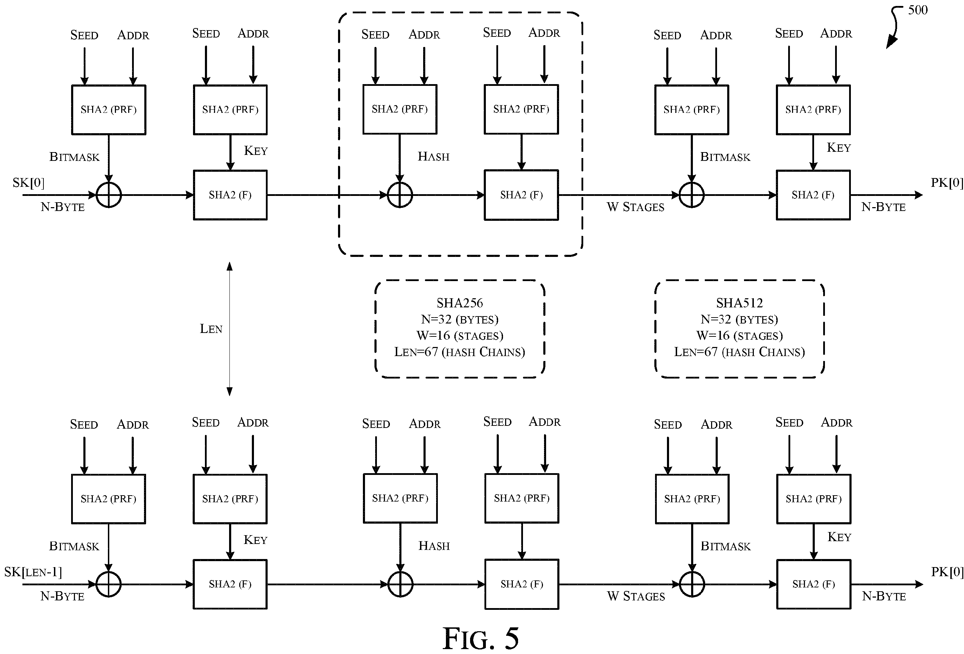

Fig. 5 is a schematic illustration of a compute blocks in an architecture 500 to implement a signature algorithm, in accordance with some examples. Referring to Fig. 5, the WOTS+ operation involves 67 parallel chains of 16 SHA2-256 HASH functions, each with the secret key sk[66:0] as input. Each HASH operation in the chain consists of 2 pseudo-random functions (PRF) using SHA2-256 to generate a bitmask and a key. The bitmask is XOR-ed with the previous hash and concatenated with the key as input message to a 3rd SHA2-256 hash operation. The 67×32-byte WOTS public key pk[66:0] is generated by hashing secret key sk across the 67 hash chains.

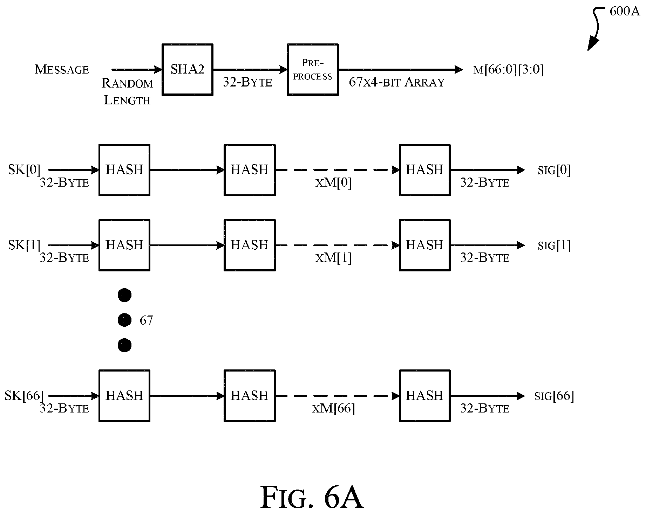

Fig. 6A is a schematic illustration of a compute blocks in an architecture 600A to implement signature generation in a signature algorithm, in accordance with some examples. As illustrated in Fig. 6A, for message signing, the input message is hashed and pre-processed to compute a 67×4-bit value, which is used as an index to choose an intermediate hash value in each operation of the chain function.

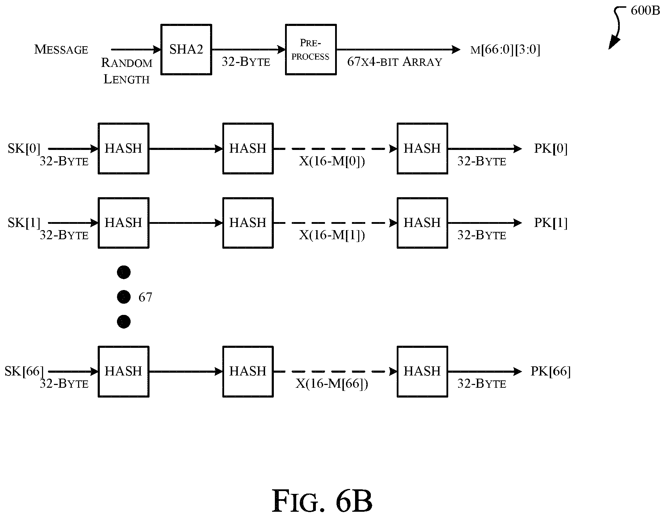

Fig. 6B is a schematic illustration of a compute blocks in an architecture 600B to implement signature verification in a verification algorithm, in accordance with some examples. Referring to Fig. 6B, during verification, the message is again hashed to compute the signature indices and compute the remaining HASH operations in each chain to compute the WOTS public key pk. This value and the authentication path are used to compute the root of the Merkle tree and compare with the shared public key PK to verify the message.

### Parallel Processing Techniques for Hash-Based Signature Algorithms

As described above, Hash-Based Signature (HBS) algorithms offer a promising approach for post-quantum digital signatures. HBS algorithms such as XMSS invoke hundreds or even thousands of calls to one or more underlying hash functions, which is computationally expensive.

HBS algorithms use a one-time signing algorithm as a building block. The main limitation of one-time schemes is that each key must sign only a single message. In some examples, HBS algorithms may bind a large set of one-time key pairs into a single multi-time key pair by using a Merkle tree. To sign messages and verify signatures, HBS algorithms process the one-time signing/verifying algorithm followed by operations to validate if the used one-time key pair belongs to the overall Merkle tree.

As described above, in some examples the one-time signature keygen/sign/verify algorithms operate on a message over 67 chunks of 32 bytes each. More precisely, the private key is composed of 67 chunks of 32 bytes each, the signature is composed by 67 chunks of 32 bytes each, and the public key is composed by 67 chunks of 32 bytes each. To generate the public key from the private key, the one-time algorithm applies the hash chain function 15 times. The signature of a message m is generated as follows. At first, the message is hashed and then encoded into 67 integers between 0 and 15. The signature of the message m is the result of applying the hash chain over the private key chunk ski exactly mi times, where mi denotes the i-th integer that represents (in encoded format) the message to be signed.

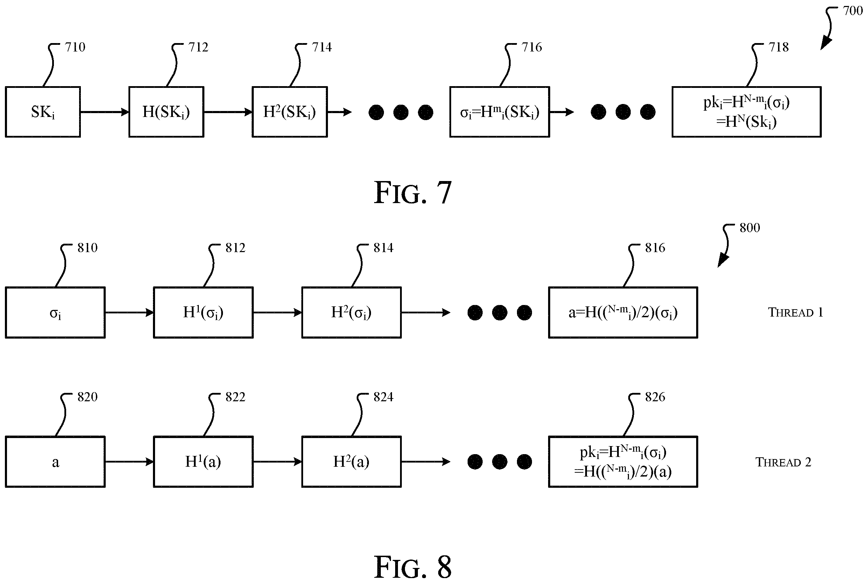

Fig. 7 is a schematic illustration of a processing sequence 700 to compute a hash-based signature which illustrates processing of a single chunk of 32 bytes in the one-time algorithm. The private key chunk ski 710 is consecutively hashed (i.e., the output of one hash call 712 is used as the input of the next hash call 714) mi times to generate the signature chunk σᵢ 716. The exponent above letter H indicates how many times the hash is consecutively called. To verify that the signature is authentic, the verifier consecutively hashes the signature chunk σᵢ exactly (N-mᵢ) times. In the end, the verifier should recover a value that matches the public key chunk pki, which is computed in key generation time as N hash applications over the private key chunk ski.

The chain process illustrated in Fig. 7 is an inherently sequential process, (i.e., one hash computation after another) since there is no way to determine the result of k hash applications without effectively computing k consecutive hash calls. If there were a shortcut to this computation, the hash function is not a cryptographically secure hash function.

One way to accelerate HBS algorithms would be to implement multiple hash engines in the platform and compute these hash calls in parallel. However, several steps in HBS algorithms are sequential in nature. Described herein are techniques to enable parallel processing in sequential HBS steps including hash chain functions and root node reconstruction functions.

In some examples, techniques described herein "fold" operations that are sequential in HBS algorithms into two (or more) smaller, operations that may be executed in parallel. For example, in the hash chain computation required for signature verification, the verifier computes a sequence of consecutive hash calls from hash chain state 1 up to hash chain state m, where m is derived from the signed message. In some examples, the signer may disclose to the verifier the hash state after (m/2) hash chain calls. Knowing this intermediate hash chain state, the verifier can process two hash chain computation threads in parallel: a first chain from hash chain state 1 to hash chain state m/2, and a second chain from hash chain state m/2 to hash chain state m.

In particular, the process of signature verification comprises applying a hash function from the initial state σᵢ until the state pkᵢ=H^{N-m}ᵢ (σᵢ). This means (N-mᵢ) consecutive hash calls. In this context, the signer can disclose to the verifier one or more intermediate nodes of the sequence of hash operations along with the signature. For example, in one example the signer may disclose the intermediate value a=H((^{N-m}ᵢ)^{/2})(σᵢ), which splits this sequential sequence of hash calls into two shorter sequence of equal size.

Fig. 8 is a schematic illustration of a processing sequence 800 to compute a hash-based signature, in accordance with some examples. As illustrated in Fig. 8, the hash functions that had to be performed serially in Fig. 7 may be broken into two threads of hash applications can be performed in parallel during signature verification. The first hash thread begins with the initial state σᵢ 810 which is subjected to hash functions 812, 814, and so on until the intermediate state 816 in which a= H((^{N-m}ᵢ)²)(σᵢ) is obtained. In parallel, the second thread begins with intermediate value a=H((^{N-m}ᵢ)^{/2})(σᵢ) 820 which is subjected to has functions 822, 824 and so on until the final state 826 of pkᵢ=H^{N-m}ᵢ(σᵢ), which is also equal to H((^{N-m}ᵢ)^{/2})(a).

The verifier has both σ and a as starting points and performs both hash chains in parallel. Ultimately, the verifying device two things: that the result of first hash chain matches a, and that the result of the second hash chain matches the WOTS public key..

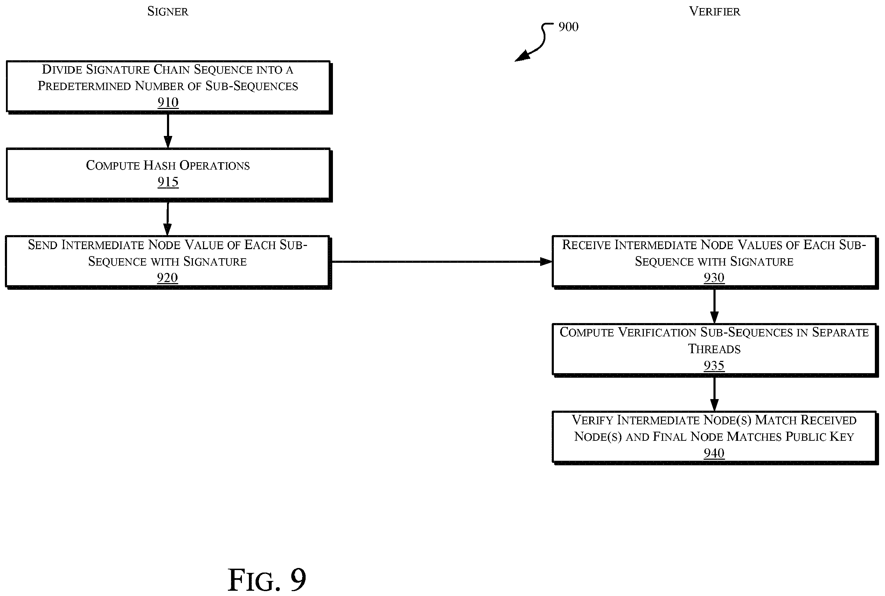

Fig. 9 is a flowchart illustrating operations in a method to implement parallel processing techniques for hash-based signature algorithms, in accordance with some examples. Referring to Fig. 9, at operation 910 a signature chain sequence is divided into a predetermined number of sub-sequences. The number of sub-sequences may be a design choice and may be selected based upon a number of factors including the processing capacity of the verification device and/or any speed requirements for the verification operation. In general, the verification processing time is approximately linearly related to the predetermined number of sub-sequences, so when a sequence of length L operations is divided into J sub-sequences the verification time is approximately J times faster than a conventional serial HBS algorithms. This requires the signer to disclose the (J-1) different intermediate nodes to the verifier with the signature. It will be noted that that the signature size increases by the same factor. Thus, different trade-offs between signature size and speedup can be achieved depending on the application requirements.

At operation 915 the signer computes the hash operations associated with generating a message signature using a signature algorithm as described above, and at operation 920 the signer transmits the intermediate node value of each sub-sequence to the verifier along with the signature.

At operation 930 the verifier receives the intermediate node value of each sub-sequence and the signature. At operation 935 the verifier computes the verification subsequences in separate threads in parallel or substantially in parallel. At the end, the verifier compare the result of the first thread with a to ensures that the two hash chains are connected, and the result of the second thread with the one time public key to ensure that the signature is authentic..

Another application of HBS algorithms that can benefit from our invention is the root node reconstruction step of a Merkle tree. This process is called once the one-time signature verification algorithm is completed, resulting in 67 public key chunks as described with reference to Fig. 7 and Fig. 8. These 67 chunks are compressed into a single 32-bytes value, which for the sake of simplicity as may be referred to as pk, through a method commonly referred to as L-Tree Compression. Given pk and an authentication path through a Merle tree it is possible for the verifier to reconstruct the root node of the Merkle tree.

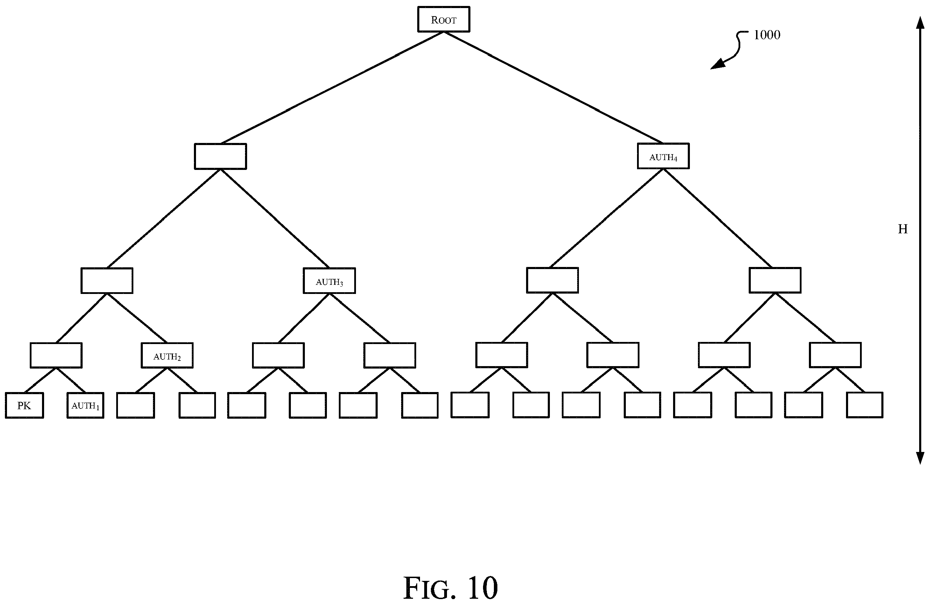

Fig. 10 is a schematic illustration of a processing sequence through a Merkle tree 1000. Referring to Fig. 10, as described above, in a Merkle Tree, the parent node is computed as the hash of the concatenation of its two children nodes. Again, this process is sequential because in step i the verifier produces the nodes required in step i+1. For variants of XMSS that enable larger trees, such as XMSS-MT, the height of the Merkle Tree can be as high as 60 layers, thus implying 60 sequential hash calls.

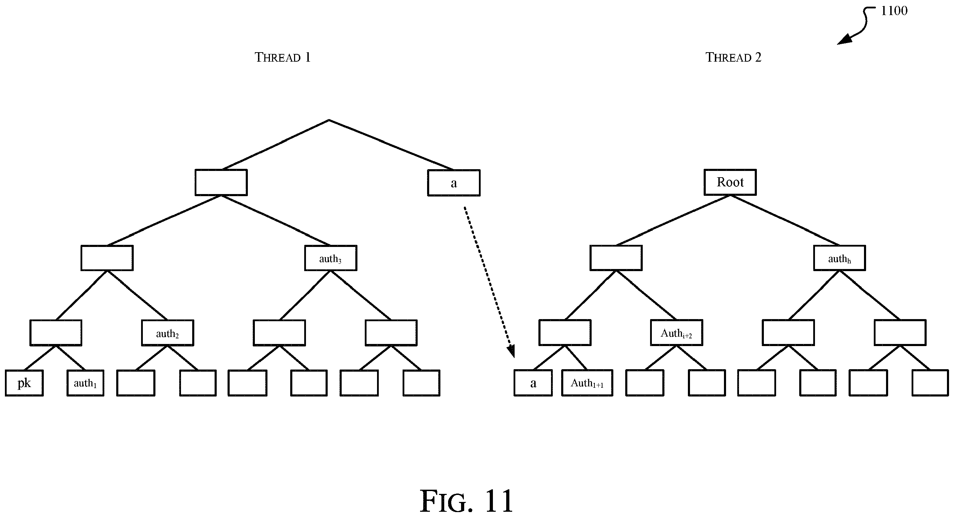

Referring to Fig. 11, in a manner analogous to the operations described above with respect to hash chain functions, in some examples intermediate nodes of a root node reconstruction process may disclosed to the verifier along with the signature. Once the first thread is completed, the verifier checks if the recomputed value of a matches the intermediate value the signer provided along with the signature. The recomputed value a is used as the starting point of Thread 2. The value a is provided in the signature, so the verifier can start building the tree from a since the very beginning. In parallel, the verifier also starts the process from pk. In the end the verifier checks if the result of the first sub-tree building process indeed generated a, and also checks if the other result sub-tree building process generated the expected Root.

In general, the verification processing time for a Merkle tree is approximately linearly related to the predetermined number of sub-sequences, so when a sequence of length L operations is divided into J sub-sequences the verification time is approximately J times faster than a conventional serial HBS algorithms. This requires the signer to disclose the (J-1) different intermediate nodes to the verifier with the signature. It will be noted that that the signature size increases by the same factor. Thus, different trade-offs between signature size and speedup can be achieved depending on the application requirements.

Techniques described herein can be applied to any Merkle-like HBS signature scheme, in any parameter configuration. This includes the recently published IETF standard RFC-8391 (XMSS) but also other variants such as the LMS scheme published as IETF RFC-8554.

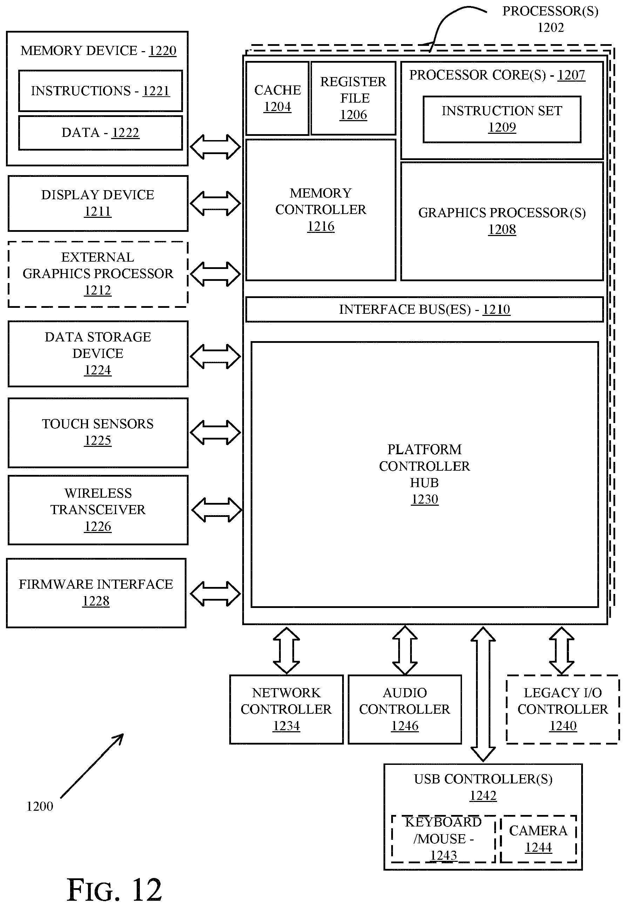

Fig. 12 illustrates an embodiment of an exemplary computing architecture that may be suitable for implementing various embodiments as previously described. In various embodiments, the computing architecture 1200 may comprise or be implemented as part of an electronic device. In some embodiments, the computing architecture 1200 may be representative, for example of a computer system that implements one or more components of the operating environments described above. In some embodiments, computing architecture 1200 may be representative of one or more portions or components of a DNN training system that implement one or more techniques described herein. The embodiments are not limited in this context.

As used in this application, the terms "system" and "component" and "module" are intended to refer to a computer-related entity, either hardware, a combination of hardware and software, software, or software in execution, examples of which are provided by the exemplary computing architecture 1200. For example, a component can be, but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the unidirectional or bi-directional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

The computing architecture 1200 includes various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by the computing architecture 1200.

As shown in Figure 12, the computing architecture 1200 includes one or more processors 1202 and one or more graphics processors 1208, and may be a single processor desktop system, a multiprocessor workstation system, or a server system having a large number of processors 1202 or processor cores 1207. In on embodiment, the system 1200 is a processing platform incorporated within a system-on-a-chip (SoC or SOC) integrated circuit for use in mobile, handheld, or embedded devices.

An embodiment of system 1200 can include, or be incorporated within a server-based gaming platform, a game console, including a game and media console, a mobile gaming console, a handheld game console, or an online game console. In some embodiments system 1200 is a mobile phone, smart phone, tablet computing device or mobile Internet device. Data processing system 1200 can also include, couple with, or be integrated within a wearable device, such as a smart watch wearable device, smart eyewear device, augmented reality device, or virtual reality device. In some embodiments, data processing system 1200 is a television or set top box device having one or more processors 1202 and a graphical interface generated by one or more graphics processors 1208.

In some embodiments, the one or more processors 1202 each include one or more processor cores 1207 to process instructions which, when executed, perform operations for system and user software. In some embodiments, each of the one or more processor cores 1207 is configured to process a specific instruction set 1209. In some embodiments, instruction set 1209 may facilitate Complex Instruction Set Computing (CISC), Reduced Instruction Set Computing (RISC), or computing via a Very Long Instruction Word (VLIW). Multiple processor cores 1207 may each process a different instruction set 1209, which may include instructions to facilitate the emulation of other instruction sets. Processor core 1207 may also include other processing devices, such a Digital Signal Processor (DSP).

In some embodiments, the processor 1202 includes cache memory 1204. Depending on the architecture, the processor 1202 can have a single internal cache or multiple levels of internal cache. In some embodiments, the cache memory is shared among various components of the processor 1202. In some embodiments, the processor 1202 also uses an external cache (e.g., a Level-3 (L3) cache or Last Level Cache (LLC)) (not shown), which may be shared among processor cores 1207 using known cache coherency techniques. A register file 1206 is additionally included in processor 1202 which may include different types of registers for storing different types of data (e.g., integer registers, floating point registers, status registers, and an instruction pointer register). Some registers may be general-purpose registers, while other registers may be specific to the design of the processor 1202.

In some embodiments, one or more processor(s) 1202 are coupled with one or more interface bus(es) 1210 to transmit communication signals such as address, data, or control signals between processor 1202 and other components in the system. The interface bus 1210, in one embodiment, can be a processor bus, such as a version of the Direct Media Interface (DMI) bus. However, processor busses are not limited to the DMI bus, and may include one or more Peripheral Component Interconnect buses (e.g., PCI, PCI Express), memory busses, or other types of interface busses. In one embodiment the processor(s) 1202 include an integrated memory controller 1216 and a platform controller hub 1230. The memory controller 1216 facilitates communication between a memory device and other components of the system 1200, while the platform controller hub (PCH) 1230 provides connections to I/O devices via a local I/O bus.

Memory device 1220 can be a dynamic random-access memory (DRAM) device, a static random-access memory (SRAM) device, flash memory device, phase-change memory device, or some other memory device having suitable performance to serve as process memory. In one embodiment the memory device 1220 can operate as system memory for the system 1200, to store data 1222 and instructions 1221 for use when the one or more processors 1202 executes an application or process. Memory controller hub 1216 also couples with an optional external graphics processor 1212, which may communicate with the one or more graphics processors 1208 in processors 1202 to perform graphics and media operations. In some embodiments a display device 1211 can connect to the processor(s) 1202. The display device 1211 can be one or more of an internal display device, as in a mobile electronic device or a laptop device or an external display device attached via a display interface (e.g., DisplayPort, etc.). In one embodiment the display device 1211 can be a head mounted display (HMD) such as a stereoscopic display device for use in virtual reality (VR) applications or augmented reality (AR) applications.

In some embodiments the platform controller hub 1230 enables peripherals to connect to memory device 1220 and processor 1202 via a high-speed I/O bus. The I/O peripherals include, but are not limited to, an audio controller 1246, a network controller 1234, a firmware interface 1228, a wireless transceiver 1226, touch sensors 1225, a data storage device 1224 (e.g., hard disk drive, flash memory, etc.). The data storage device 1224 can connect via a storage interface (e.g., SATA) or via a peripheral bus, such as a Peripheral Component Interconnect bus (e.g., PCI, PCI Express). The touch sensors 1225 can include touch screen sensors, pressure sensors, or fingerprint sensors. The wireless transceiver 1226 can be a Wi-Fi transceiver, a Bluetooth transceiver, or a mobile network transceiver such as a 3G, 4G, or Long Term Evolution (LTE) transceiver. The firmware interface 1228 enables communication with system firmware, and can be, for example, a unified extensible firmware interface (UEFI). The network controller 1234 can enable a network connection to a wired network. In some embodiments, a high-performance network controller (not shown) couples with the interface bus 1210. The audio controller 1246, in one embodiment, is a multi-channel high definition audio controller. In one embodiment the system 1200 includes an optional legacy I/O controller 1240 for coupling legacy (e.g., Personal System 2 (PS/2)) devices to the system. The platform controller hub 1230 can also connect to one or more Universal Serial Bus (USB) controllers 1242 connect input devices, such as keyboard and mouse 1243 combinations, a camera 1244, or other USB input devices.

The following pertains to further examples.

Example 1 is an apparatus comprising a computer readable memory to store a public key associated with a signing device; communication logic to receive, from the signing device, a signature chunk which is a component of a signature generated by a hash-based signature algorithm, and at least a first intermediate node value associated with the signature chunk; verification logic to execute a first hash chain beginning with the signature chunk to produce at least a first computed intermediate node value; execute a second hash chain beginning with the at least one intermediate node value associated with the signature chunk to produce a first computed final node value; and use the first computed intermediate node value and the first computed final computed node value to validate the signature generated by the hash-based signature algorithm.

In Example 2, the subject matter of Example 1 can optionally include an arrangement wherein the hash-based signature algorithm comprises at least one of a Winterniz One Time Signature (WOTS) algorithm or a WOTS+ algorithm that invokes a secure hash algorithm (SHA) hash function.

In Example 3, the subject matter of any one of Examples 1-2 can optionally include an arrangement wherein the secure hash algorithm (SHA) has function comprises at least one of a SHA2-256, a SHA2-512, a SHA3-128, or a SHA3-256 hash function.

In Example 4, the subject matter of any one of Examples 1-3 can optionally include an arrangement wherein the signature comprises a total of 67 signature components, each of which is 32 bytes in length.

In Example 5, the subject matter of any one of Examples 1-4 can optionally include verifier logic to compare the first computed intermediate node value with the first intermediate node value received from the signing device; and compare the first computed final node value with a portion of the public key for the signing device.

Example 6 is a computer-implemented method, comprising storing a public key associated with a signing device in a computer-readable medium; receiving, from the signing device, a signature chunk which is a component of a signature generated by a hash-based signature algorithm, and at least a first intermediate node value associated with the signature chunk; executing a first hash chain beginning with the signature chunk to produce at least a first computed intermediate node value; executing a second hash chain beginning with the at least one intermediate node value associated with the signature chunk to produce a first computed final node value; and using the first computed intermediate node value and the first computed final computed node value to validate the signature generated by the hash-based signature algorithm.

In Example 7, the subject matter of Example 6 can optionally include an arrangement wherein the hash-based signature algorithm comprises at least one of a Winterniz One Time Signature (WOTS) algorithm or a WOTS+ algorithm that invokes a secure hash algorithm (SHA) hash function.

In Example 8, the subject matter of any one of Examples 6-7 can optionally include an arrangement wherein wherein the secure hash algorithm (SHA) has function comprises at least one of a SHA2-256, a SHA2-512, a SHA3-128, or a SHA3-256 hash function.

In Example 9, the subject matter of any one of Examples 6-8 can optionally include an arrangement wherein wherein the signature comprises a total of 67 signature components, each of which is 32 bytes in length.

In Example 10, the subject matter of any one of Examples 6-9 can optionally include comparing the first computed intermediate node value with the first intermediate node value received from the signing device; and comparing the first computed final node value with a portion of the public key for the signing device.

Example 11 is non-transitory computer-readable medium comprising instructions which, when executed by a processor, configure the processor to perform operations, comprising storing a public key associated with a signing device in a computer-readable medium; receiving, from the signing device, a signature chunk which is a component of a signature generated by a hash-based signature algorithm, and at least a first intermediate node value associated with the signature chunk; executing a first hash chain beginning with the signature chunk to produce at least a first computed intermediate node value; executing a second hash chain beginning with the at least one intermediate node value associated with the signature chunk to produce a first computed final node value; andusing the first computed intermediate node value and the first computed final computed node value to validate the signature generated by the hash-based signature algorithm.

In Example 12, the subject matter of Example 11 can optionally include an arrangement wherein the hash-based signature algorithm comprises at least one of a Winterniz One Time Signature (WOTS) algorithm or a WOTS+ algorithm that invokes a secure hash algorithm (SHA) hash function.

In Example 13, the subject matter of any one of Examples 11-12 can optionally include an arrangement wherein the secure hash algorithm (SHA) has function comprises at least one of a SHA2-256, a SHA2-512, a SHA3-128, or a SHA3-256 hash function.

In Example 14, the subject matter of any one of Examples 11-13 can optionally include an arrangement wherein the signature comprises a total of 67 signature components, each of which is 32 bytes in length.

In Example 15, the subject matter of any one of Examples 11-14 can optionally include instructions which, when executed by the processor, configure the processor to perform operations, comprising comparing the first computed intermediate node value with the first intermediate node value received from the signing device; and comparing the first computed final node value with a portion of the public key for the signing device.

Example 16 is an apparatus, comprising a computer readable memory to store a private key associated with a signing device; signature logic to generate a signature using a hash-based signature algorithm and the private key, the signature comprising at least a first signature chunk which is a component of the signature, and at least a first intermediate node value associated with the signature chunk; and communication logic to send the at least a first signature chunk and the at least a first intermediate node value associated with the signature chunk to a verifying device.

In Example 17, the subject matter of Example 16 can optionally include an arrangement wherein the hash-based signature algorithm comprises at least one of a Winterniz One Time Signature (WOTS) algorithm or a WOTS+ algorithm that invokes a secure hash algorithm (SHA) hash function.

In Example 18, the subject matter of any one of Examples 16-17 can optionally include an arrangement wherein the secure hash algorithm (SHA) has function comprises at least one of a SHA2-256, a SHA2-512, a SHA3-128, or a SHA3-256 hash function.

In Example 19, the subject matter of any one of Examples 16-18 can optionally include an arrangement wherein the signature comprises a total of 67 signature components, each of which is 32 bytes in length.

Example 20 is a computer-implemented method, comprising storing a private key associated with a signing device in a computer-readable memory; generating a signature using a hash-based signature algorithm and the private key, the signature comprising at least a first signature chunk which is a component of the signature, and at least a first intermediate node value associated with the signature chunk; and sending the at least a first signature chunk and the at least a first intermediate node value associated with the signature chunk to a verifying device.

In Example 21, the subject matter of Example 20 can optionally include an arrangement wherein the hash-based signature algorithm comprises at least one of a Winterniz One Time Signature (WOTS) algorithm or a WOTS+ algorithm that invokes a secure hash algorithm (SHA) hash function.

In Example 22, the subject matter of any one of Examples 20-21 can optionally include an arrangement wherein wherein the secure hash algorithm (SHA) has function comprises at least one of a SHA2-256, a SHA2-512, a SHA3-128, or a SHA3-256 hash function.

In Example 23, the subject matter of any one of Examples 20-22 can optionally include an arrangement wherein wherein the signature comprises a total of 67 signature components, each of which is 32 bytes in length.

Example 24 is a non-transitory computer-readable medium comprising instructions which, when executed by a processor, configure the processor to perform operations, comprising storing a private key associated with a signing device in a computer-readable memory; generating a signature using a hash-based signature algorithm and the private key, the signature comprising at least a first signature chunk which is a component of the signature, and at least a first intermediate node value associated with the signature chunk; and sending the at least a first signature chunk and the at least a first intermediate node value associated with the signature chunk to a verifying device.

In Example 25, the subject matter of Example 24 can optionally include an arrangement wherein the hash-based signature algorithm comprises at least one of a Winterniz One Time Signature (WOTS) algorithm or a WOTS+ algorithm that invokes a secure hash algorithm (SHA) hash function.

In Example 26, the subject matter of any one of Examples 24-25 can optionally include an arrangement wherein wherein the secure hash algorithm (SHA) has function comprises at least one of a SHA2-256, a SHA2-512, a SHA3-128, or a SHA3-256 hash function.

In Example 27, the subject matter of any one of Examples 24-26 can optionally include an arrangement wherein wherein the signature comprises a total of 67 signature components, each of which is 32 bytes in length.

The above Detailed Description includes references to the accompanying drawings, which form a part of the Detailed Description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplated are examples using any combination or permutation of those elements shown or described (or one or more aspects thereof), either with respect to a particular example (or one or more aspects thereof), or with respect to other examples (or one or more aspects thereof) shown or described herein.

Publications, patents, and patent documents referred to in this document are incorporated by reference herein in their entirety, as though individually incorporated by reference. In the event of inconsistent usages between this document and those documents so incorporated by reference, the usage in the incorporated reference(s) are supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In addition "a set of" includes one or more elements. In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended; that is, a system, device, article, or process that includes elements in addition to those listed after such a term in a claim are still deemed to fall within the scope of that claim. Moreover, in the following claims, the terms "first," "second," "third," etc. are used merely as labels, and are not intended to suggest a numerical order for their objects.

The terms "logic instructions" as referred to herein relates to expressions which may be understood by one or more machines for performing one or more logical operations. For example, logic instructions may comprise instructions which are interpretable by a processor compiler for executing one or more operations on one or more data objects. However, this is merely an example of machine-readable instructions and examples are not limited in this respect.

The terms "computer readable medium" as referred to herein relates to media capable of maintaining expressions which are perceivable by one or more machines. For example, a computer readable medium may comprise one or more storage devices for storing computer readable instructions or data. Such storage devices may comprise storage media such as, for example, optical, magnetic or semiconductor storage media. However, this is merely an example of a computer readable medium and examples are not limited in this respect.

The term "logic" as referred to herein relates to structure for performing one or more logical operations. For example, logic may comprise circuitry which provides one or more output signals based upon one or more input signals. Such circuitry may comprise a finite state machine which receives a digital input and provides a digital output, or circuitry which provides one or more analog output signals in response to one or more analog input signals. Such circuitry may be provided in an application specific integrated circuit (ASIC) or field programmable gate array (FPGA). Also, logic may comprise machine-readable instructions stored in a memory in combination with processing circuitry to execute such machine-readable instructions. However, these are merely examples of structures which may provide logic and examples are not limited in this respect.

Some of the methods described herein may be embodied as logic instructions on a computer-readable medium. When executed on a processor, the logic instructions cause a processor to be programmed as a special-purpose machine that implements the described methods. The processor, when configured by the logic instructions to execute the methods described herein, constitutes structure for performing the described methods. Alternatively, the methods described herein may be reduced to logic on, e.g., a field programmable gate array (FPGA), an application specific integrated circuit (ASIC) or the like.

In the description and claims, the terms coupled and connected, along with their derivatives, may be used. In particular examples, connected may be used to indicate that two or more elements are in direct physical or electrical contact with each other. Coupled may mean that two or more elements are in direct physical or electrical contact. However, coupled may also mean that two or more elements may not be in direct contact with each other, but yet may still cooperate or interact with each other.

Reference in the specification to "one example" or "some examples" means that a particular feature, structure, or characteristic described in connection with the example is included in at least an implementation. The appearances of the phrase "in one example" in various places in the specification may or may not be all referring to the same example.

The above description is intended to be illustrative, and not restrictive. For example, the above-described examples (or one or more aspects thereof) may be used in combination with others. Other embodiments may be used, such as by one of ordinary skill in the art upon reviewing the above description. The Abstract is to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. However, the claims may not set forth every feature disclosed herein as embodiments may feature a subset of said features. Further, embodiments may include fewer features than those disclosed in a particular example. Thus, the following claims are hereby incorporated into the Detailed Description, with each claim standing on its own as a separate embodiment. The scope of the embodiments disclosed herein is to be determined with reference to the appended claims, along with the full scope of equivalents to which such claims are entitled.

Although examples have been described in language specific to structural features and/or methodological acts, it is to be understood that claimed subject matter may not be limited to the specific features or acts described. Rather, the specific features and acts are disclosed as sample forms of implementing the claimed subject matter.

## Claims

1. An apparatus, comprising:
a computer readable memory to store a public key associated with a signing device;
communication logic to receive, from the signing device, a signature chunk which is a component of a signature generated by a hash-based signature algorithm, and at least a first intermediate node value associated with the signature chunk;
verification logic to:
execute a first hash chain beginning with the signature chunk to produce at least a first computed intermediate node value;
execute a second hash chain beginning with the at least one intermediate node value associated with the signature chunk to produce a first computed final node value; and
use the first computed intermediate node value and the first computed final computed node value to validate the signature generated by the hash-based signature algorithm.

2. The apparatus of claim 1, wherein the hash-based signature algorithm comprises at least one of a Winterniz One Time Signature (WOTS) algorithm or a WOTS+ algorithm that invokes a secure hash algorithm (SHA) hash function.

3. The apparatus of any one of claims 1-2, wherein the secure hash algorithm (SHA) has function comprises at least one of a SHA2-256, a SHA2-512, a SHA3-128, or a SHA3-256 hash function.

4. The apparatus of any one of claims 1-3, wherein the signature comprises a total of 67 signature components, each of which is 32 bytes in length.

5. The apparatus of any one of claims 1-3, the verifier logic to:
compare the first computed intermediate node value with the first intermediate node value received from the signing device; and
compare the first computed final node value with a portion of the public key for the signing device.

6. A computer-implemented method, comprising:
storing a public key associated with a signing device in a computer-readable medium;
receiving, from the signing device, a signature chunk which is a component of a signature generated by a hash-based signature algorithm, and at least a first intermediate node value associated with the signature chunk;
executing a first hash chain beginning with the signature chunk to produce at least a first computed intermediate node value;
executing a second hash chain beginning with the at least one intermediate node value associated with the signature chunk to produce a first computed final node value; and
using the first computed intermediate node value and the first computed final computed node value to validate the signature generated by the hash-based signature algorithm.

7. The method of claim 6, wherein the hash-based signature algorithm comprises at least one of a Winterniz One Time Signature (WOTS) algorithm or a WOTS+ algorithm that invokes a secure hash algorithm (SHA) hash function.

8. The method of any one of claims 6-7, wherein the secure hash algorithm (SHA) has function comprises at least one of a SHA2-256, a SHA2-512, a SHA3-128, or a SHA3-256 hash function.

9. The method of any one of claims 6-7, wherein the signature comprises a total of 67 signature components, each of which is 32 bytes in length.

10. The method of any one of claims 6-7, further comprising:
comparing the first computed intermediate node value with the first intermediate node value received from the signing device; and
comparing the first computed final node value with a portion of the public key for the signing device.
